# EUROPÄISCHE PATENTSCHRIFT

(11) **EP 3 649 356 B1**
(45) Veröffentlichungstag und Bekanntmachung des Hinweises auf die Patenterteilung: **09.06.2021**
(21) Anmeldenummer: 18750315.6
(22) Anmeldetag: 04.07.2018
(51) Int. Cl.: F16C 11/12, F16D 3/56, F16D 3/00

(54) **GELENK**
ARTICULATION
ARTICULATION

(30) Priorität: 05.07.2017 DE 102017115050
(43) Veröffentlichungstag der Anmeldung: 13.05.2020
(73) Patentinhaber: Physik Instrumente (PI) GmbH & Co. KG, 76228 Karlsruhe (DE)
(72) Erfinder: HÜBNER, Reinhard, 76337 Waldbronn (DE)
(74) Vertreter: Grünecker Patent- und Rechtsanwälte PartG mbB
(86) Internationale Anmeldenummer: PCT/DE2018/100611
(87) Internationale Veröffentlichungsnummer: WO 2019/007463

(56) Entgegenhaltungen:
- DE-A1-102014 002 182
- FR-A1- 2 959 689
- US-A- 2 793 028
- US-A- 3 332 255
- US-A- 5 611 714
- US-A1- 2013 308 997

## Beschreibung

Die Erfindung betrifft ein Gelenk gemäß den Ansprüchen 1 bis 8 und eine parallelkinematische Verstellvorrichtung mit wenigstens einem solchen Gelenk gemäß den Ansprüchen 9 bis 11.

Die Druckschrift US 2014 / 0 147 193 A1 beschreibt ein Kardangelenk mit zwei orthogonal zueinander angeordneten flexiblen Rahmenelementen, wobei die Rahmenelemente über Festkörpergelenke miteinander verbunden sind.

Aus der DE 10 2014 006 727 B3 ist ein Festkörpergelenk mit zwei schwenkbar um eine Drehachse angeordneten Lagerelementen bekannt, welche über Federelemente miteinander verbunden sind. Erfindungsgemäß ist zwischen den beiden Lagerelementen ein spiral- oder helikalförmiges Federelement angeordnet.

Die DE 10 2014 002 182 A1 lehrt ein zweiachsig auslenkbares monolithisches Festkörpergelenk mit zwei Paaren sich gegenüberstehender Biegekreuzfedern, welche über Stege miteinander verbunden sind.

Die DE 697 03 871 T2 betrifft ein flexibles planares Schwenkgelenk mit sich kreuzenden Blättern, wobei die Blätter jeweils einstückig mit einem Verbindungselement ausgeführt sind.

Die US 2011 / 0 188 926 A1 beschreibt ein Gelenk, bei welchem die beiden relativ zueinander zu bewegenden Elemente über sich kreuzende ringförmige Stegabschnitte miteinander verbunden sind.

Aus dem allgemeinen Stand der Technik sind weiterhin Kugelgelenke bekannt, bei welchen ein Kugelkopf in einer komplementär geformten Kugelpfanne gelagert ist. Solche Kugelgelenke erlauben Rotations- bzw. Drehbewegungen um alle drei Raumachsen.

Der wesentliche Nachteil bei den aus dem allgemeinen Stand der Technik bekannten Kugelgelenken ist das Vorhandensein eines Losbrechmoments, das zum Bewegen, d.h. zum Verschwenken bzw. Verdrehen, des Kugelgelenks zunächst überwunden werden muss. Dieses Losbrechmoment rührt daher, dass bei der Reibpaarung Kugelkopf-Kugelpfanne im bewegungslosen Zustand Haftreibung zwischen Kugelkopf und Kugelpfanne mit einem Haftreibungskoeffizienten existiert, welcher höher ist als der Gleitreibungskoeffizient, der bei einer Relativbewegung zwischen Kugelkopf und Kugelpfanne vorherrschend ist. Somit muss zum Erreichen des Regimes des Gleitreibungskoeffizienten erst eine gewisse Kraft überwunden werden, die im Wesentlichen durch den Haftreibungskoeffizienten bestimmt wird.

Ein derartiges Losbrechmoment ist insbesondere dort nachteilig, wo unter Verwendung des Kugelgelenks, z.B. bei einer Verstellvorrichtung, Stellbewegungen mit hoher Auflösung und Genauigkeit realisiert werden sollen. Zudem wirken sich die Losbrechmomente nachteilig auf den Verschleiß der Reibpaarung Kugelkopf-Kugelpfanne aus. Ein erhöhter Verschleiß führt bei Positionieranwendungen zu verringerter Positioniergenauigkeit, und die entsprechenden Verschleißpartikel können in bestimmten Anwendungsfällen, wie etwa bei im Reinraum eingesetzten Verstellvorrichtungen, zu entsprechenden Verschmutzungsproblemen führen.

Daher ist es Aufgabe der Erfindung, ein Gelenk mit wenigstens drei Rotationsfreiheitsgraden, d.h. mit der Funktionalität eines Kugelgelenks, bereitzustellen, bei welchem das Losbrechmoment ganz bzw. weitestgehend eliminiert ist und welches gleichzeitig einfach und kostengünstig realisierbar ist.

Diese Aufgabe wird gelöst durch ein Gelenk gemäß Anspruch 1, wobei die sich daran anschließenden Unteransprüche mindestens zweckmäßige Weiterbildungen beschreiben.

Der im gesamten nachfolgenden Teil der Beschreibung verwendete Begriff 'im Wesentlichen' im Zusammenhang mit der Angabe von geometrischen Daten wie Winkeln, Dimensionen, Lagen, Orientierungen oder Richtungen ist so zu verstehen, dass die entsprechenden geometrischen Daten eine Abweichung von +/- 5% gegenüber dem jeweils angegebenen geometrischen Datum haben können, wobei diese Abweichung beispielsweise auf Fertigungs- oder Montagetoleranzen zurückzuführen ist.

Das erfindungsgemäße Gelenk umfasst ein starres Trägerelement und wenigstens zwei an dem Trägerelement in wenigstens abschnittsweise überlappender Anordnung ausgebildete elastisch deformierbare Gelenkelemente. Jedes der Gelenkelemente weist zwei an dem Trägerelement angeordnete und sich von diesem erstreckende stabförmige Stegabschnitte auf. Hierbei erstrecken sich die jeweils zwei stabförmigen Stegabschnitte eines Gelenkelements entweder derart, dass sie aufeinander zulaufend, d.h. zueinander konvergierend angeordnet sind, oder aber dass sie sich voneinander weg bewegend, d.h. zueinander divergierend, angeordnet sind.

An ihrem dem Trägerelement abgewandten Ende sind die beiden Stegabschnitte eines Gelenkelements über einen Anlageabschnitt miteinander verbunden. Zwei über den jeweiligen Anlageabschnitt miteinander verbundene Stegabschnitte verlaufen in einer ersten gemeinsamen Ebene bzw. spannen eine erste gemeinsame Ebene auf, und die anderen zwei über den jeweiligen Anlageabschnitt miteinander verbundenen Stegabschnitte verlaufen in einer zweiten gemeinsamen Ebene bzw. spannen eine zweite gemeinsame Ebene auf, wobei sich die erste gemeinsame Ebene und die zweite gemeinsame Ebene kreuzen, d.h. dass die erste gemeinsame Ebene und die zweite gemeinsame Ebene nicht parallel zueinander angeordnet sind.

Es kann von Vorteil sein, dass die Stegabschnitte des einen Gelenkelements zumindest abschnittsweise zwischen den Stegabschnitten des anderen Gelenkelements verlaufen. Somit ist eine sich kreuzende Anordnung der Stegabschnitte der beiden Gelenkelemente vergleichsweise einfach realisierbar.

Es kann auch von Vorteil sein, dass der Anlageabschnitt einstückig mit den beiden zugeordneten stabförmigen Stegabschnitten ausgebildet ist. Hierdurch gelingt eine Reduzierung der Teile des Gelenks, so dass die Montage des Gelenks vereinfacht und schneller bzw. kostengünstiger realisierbar ist.

Weiterhin kann es von Vorteil sein, dass die beiden Stegabschnitte eines Gelenkelements an ihrem dem Trägerelement zugewandten Ende über einen integral mit den Stegabschnitten ausgebildeten Befestigungsabschnitt miteinander verbunden sind, und das jeweilige Gelenkelement über den Befestigungsabschnitt mit dem Trägerelement verbunden ist. Hierdurch gelingt eine besonders einfache Befestigung der Gelenkelemente an dem Trägerelement.

Zudem kann es von Vorteil sein, dass die Stegabschnitte eines Gelenkelements einen Winkel zwischen sich einschließen, der zwischen 60 und 120°, und bevorzugt zwischen 70 und 95° beträgt.

Außerdem kann es von Vorteil sein, dass an dem Trägerelement wenigstens ein elastisch deformierbares Stützelement angeordnet ist. Hierbei ist es insbesondere von Vorteil, wenn sich das Stützelement zwischen den beiden Gelenkelementen in einer dem Trägerelement abgewandten Richtung erstreckt. Mit Hilfe des Stützelements können die Stegabschnitte der Gelenkelemente auf einfache Weise mit einer Zugkraft beaufschlagt werden, so dass eine Vorspannung der Gelenkelemente in der Erstreckungsrichtung des Gelenks resultiert.

Darüber hinaus kann es von Vorteil sein, dass das Gelenk vier an dem Trägerelement angeordnete Gelenkelemente und zwei an dem Trägerelement angeordnete Stützelemente aufweist, wobei die Gelenkelemente paarweise an den gegenüberliegenden Enden des Trägerelements angeordnet sind, und die Stützelemente einzeln an den gegenüberliegenden Enden des Trägerelements vorgesehen sind. Durch den entsprechenden symmetrischen Aufbau des Gelenks ist eine weitgehend identische Flexibilität um alle Drehfreiheitsgrade beidseits des Trägerelements realisiert.

Die Erfindung betrifft zudem eine parallelkinematische Verstellvorrichtung mit einer feststehenden Basis und einer gegenüber der Basis verstellbaren Plattform, wobei zwischen der Basis und der Plattform wenigstens ein Gelenk wie vorstehend beschrieben angeordnet ist.

Insbesondere vorteilhaft ist hier die Verwendung von sechs Gelenken, bei welchem jeweils an dem Trägerelement vier Gelenkelemente und zwei Stützelemente angeordnet sind, und wobei an drei Gelenken - welche aktive Gelenke definierten - jeweils ein Antriebselement zum einzelnen Antrieb des entsprechenden Gelenks angeordnet ist, und die drei anderen Gelenke - welche passive Gelenke definieren - mit einem ihrer Endabschnitte mit einer gemeinsamen Führungsplattform verbunden sind.

Hierbei kann es von Vorteil sein, dass die mit der gemeinsamen Führungsplattform verbundenen Gelenke mit ihrem jeweils anderen Endabschnitt mit einem inneren Halteabschnitt der Plattform verbunden sind.

Im Folgenden werden Ausführungsbeispiele der Erfindung anhand der beigefügten Figuren beschrieben.

Es zeigen:
Figur 1: eine Ausführungsform eines erfindungsgemäßen Gelenks
Figur 2: eine Anordnung des erfindungsgemäßen Gelenks gemäß Figur 1 in einer parallelkinematischen Verstellvorrichtung

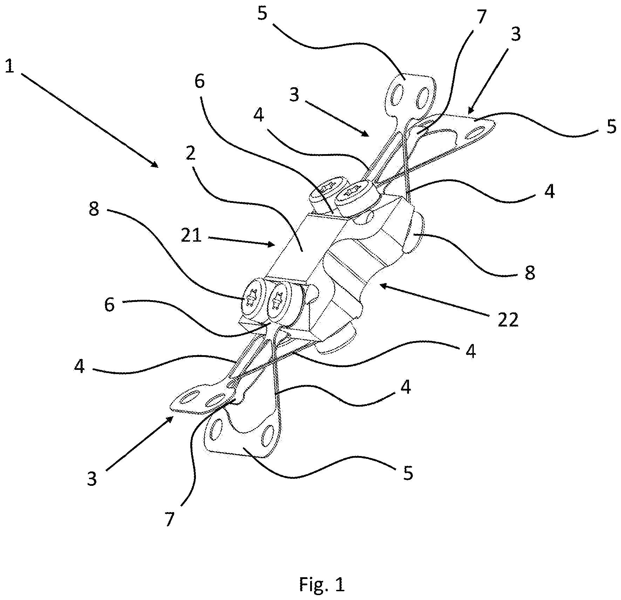

Figur 1 zeigt eine Ausführungsform eines erfindungsgemäßen Gelenks 1, bei welchem insgesamt vier an einem aus Aluminium bestehenden und im Wesentlichen starren Trägerelement 2 angeordnete und elastisch deformierbare Gelenkelemente 3 aus Federstahl vorhanden sind, wobei zwei Gelenkelemente 3 an einem distalen Ende des Trägerelements 2 angeordnet sind, während die beiden anderen Gelenkelemente 3 an dem gegenüberliegenden distalen Ende des Trägerelements 2 angeordnet sind. Die Gelenkelemente sind aus Federstahl gefertigt, jedoch sind andere, eine entsprechende elastische Deformierbarkeit aufweisende Materialien hierfür ebenso denkbar, beispielsweise Bronze, welches nichtmagnetisch ist und dann zum Einsatz kommen kann, wenn das erfindungsgemäße Gelenk in einem Magnetfeld verwendet wird. Sind nur sehr geringe Auslenkungen des Gelenks bzw. der Gelenkelemente beabsichtigt, können die Gelenkelemente auch aus einem keramischen Material gefertigt sein.

Das Trägerelement, welches neben Aluminium beispielsweise auch aus einem anderen Metall, etwa Stahl, oder auch aus Keramik gefertigt sein kann, hat eine im Wesentlichen rechteckige Form, wobei der mittlere Bereich eine größere Dicke aufweist, und sich das Trägerelement zu seinen beiden distalen Enden hin bezüglich seiner Dicke verjüngt.

Die beiden an dem gleichen distalen Ende des Trägerelements angeordneten Gelenkelemente 3 weisen jeweils einen Befestigungsabschnitt 6 auf, der integral bzw. einstückig mit den jeweiligen beiden Stegabschnitten 4 des entsprechenden Gelenkelements 3 ausgeführt ist. Mittels zweier Schrauben 8 ist der Befestigungsabschnitt 6 und damit das jeweilige Gelenkelement 3 an dem Trägerelement 2 befestigt. Andere Verbindungsarten wie Löten, Schweißen oder Kleben sind ebenso denkbar. Denkbar ist zudem jeweils eine einstückige bzw. integrale Ausführung der Stegabschnitte 4 mit dem Trägerelement 2 unter gleichzeitigem Wegfall des Befestigungsabschnitts 6.

An jedem der beiden distalen Enden des Trägerelements 2 ist sowohl an dessen Oberseite, als auch an dessen Unterseite jeweils ein Gelenkelement 3 über den Befestigungsabschnitt 8 mit dem Trägerelement 2 verbunden.

Bei den in Fig. 1 an der Oberseite des Trägerelements 2 angeordneten Gelenkelementen 3 erstrecken sich jeweils von dem Befestigungsabschnitt 6 ausgehend zwei stabförmige, langgestreckte und flexible Stegabschnitte 4 in einer dem Trägerelement abgewandten Richtung, wobei die beiden Stegabschnitte 4 von einer gemeinsamen Mitte im Bereich des Befestigungsabschnitts 6 in voneinander weg weisenden Richtungen bzw. in divergierender Anordnung verlaufen und an ihrem nicht befestigten Ende über einen integral bzw. einstückig mit diesen ausgebildeten Anlageabschnitt 5 miteinander verbunden sind.

Die zwei über den Anlageabschnitt 5 miteinander verbundenen Stegabschnitte 4 eines an der Oberseite befestigten Gelenkelements 3 verlaufen innerhalb einer ersten gemeinsamen Ebene, wobei diese Ebene in einem von 0° abweichenden Winkel gegenüber der durch die Oberseite des Trägerelements 2 aufgespannten Ebene angeordnet ist.

Der Anlageabschnitt 5 weist zwei kreisrunde Durchbrüche auf, welche dazu vorgesehen sind, den Anlageabschnitt 5 und damit das Gelenk 1 entweder mit einer feststehenden Basis oder mit einem gegenüber einer Basis durch das Gelenk beweglich gelagerten zu bewegenden Element zu verbinden, beispielsweise mittels Schrauben.

Die beiden Stegabschnitte 4 des an der oberen Seite des Trägerelements angeordneten Gelenkelements bilden zusammen mit dem Anlageabschnitt 5 im weitesten Sinne ein Dreieck, wobei die Stegabschnitte die Schenkel darstellen und der Anlageabschnitt die Basis bildet. Es ist denkbar, dass die Länge der Gelenkelemente und die Länge des Anlageabschnitts übereinstimmen und so ein gleichseitiges Dreieck durch die Gelenkelemente und den Anlageabschnitt gebildet wird.

Bei den in Fig. 1 an der Unterseite des Trägerelements 2 angeordneten Gelenkelementen 3 erstrecken sich jeweils von dem Befestigungsabschnitt 6 ausgehend zwei stabförmige, langgestreckte und flexible Stegabschnitte 4 in einer dem Trägerelement abgewandten Richtung, wobei die beiden Stegabschnitte 4 von einer im Bereich des Befestigungsabschnitts 6 auseinanderliegenden bzw. beabstandeten Position in aufeinander zulaufenden Richtungen bzw. in konvergierender Anordnung verlaufen und an ihrem nicht befestigten Ende über einen integral bzw. einstückig mit diesen ausgebildeten Anlageabschnitt 5 miteinander verbunden sind.

Die zwei über den Anlageabschnitt 5 miteinander verbundenen Stegabschnitte 4 eines an der Unterseite befestigten Gelenkelements 3 verlaufen innerhalb einer zweiten gemeinsamen Ebene, die sich von der ersten gemeinsamen Ebene, in welcher die am gleichen distalen Ende des Trägerelements angeordneten Stegabschnitte des an dessen Oberseite befestigten Gelenkelements verlaufen, unterscheidet und wobei die zweite gemeinsame Ebene in einem von 0° abweichenden Winkel gegenüber der durch die Unterseite des Trägerelements 2 aufgespannten Ebene angeordnet ist.

Auch der jeweilige Anlageabschnitt 5 der an der Unterseite des Trägerelements befestigten Gelenkelemente weist zwei kreisrunde Durchbrüche auf, welche ebenso dazu vorgesehen sind, den Anlageabschnitt 5 und damit das Gelenk 1 entweder mit einer feststehenden Basis oder mit einem gegenüber einer Basis durch das Gelenk beweglich gelagerten zu bewegenden Element zu verbinden, beispielsweise mittels Schrauben.

Die beiden Stegabschnitte 4 des an der Unterseite des Trägerelements angeordneten Gelenkelements bilden zusammen mit dem Befestigungsabschnitt 6 im weitesten Sinne ein Dreieck, wobei die Stegabschnitte die Schenkel darstellen und der Befestigungsabschnitt die Basis bildet. Es ist denkbar, dass die Länge der Gelenkelemente und die Länge des Befestigungsabschnitts übereinstimmen und so ein gleichseitiges Dreieck durch die Gelenkelemente und den Befestigungsabschnitt gebildet wird.

Die erste gemeinsame Ebene, in welcher die Stegabschnitte eines an einem distalen Ende des Trägerelements und dort an dessen Oberseite angeordneten Gelenkelements verlaufen, unterscheide sich von der zweiten gemeinsamen Ebene, in welcher die Stegabschnitt eines an dem gleichen distalen Ende des Trägerelements und dort an dessen Unterseite angeordneten Elements verlaufen. Mit anderen Worten: die erste gemeinsame Ebene und die zweite gemeinsame Ebene liegen nicht parallel zueinander, so dass sich erste und zweite gemeinsame Ebene schneiden bzw. kreuzen. Dies ist konkret dadurch realisiert, dass die Stegabschnitte 4 des an der Oberseite angeordneten Gelenkelements divergierend verlaufen, während die Stegabschnitte des an der Unterseite angeordneten Gelenkelements konvergierend verlaufen, wobei sich im Bereich der Kreuzung der jeweiligen Stegabschnitte der Abstand zwischen den beiden Stegabschnitten eines Gelenkelements von dem Abstand zwischen den beiden Stegabschnitten des anderen Gelenkelements unterscheidet. Das bedeutet, dass die Stegabschnitte des an der Oberseite des Trägerelements angeordneten Gelenkelements abschnittsweise, d.h. im Bereich der Kreuzung, zwischen den Stegabschnitten des an der Unterseite des Trägerelements angeordneten Gelenkelements verlaufen, so dass die beiden Stegabschnitte des an der Oberseite des Trägerelements angeordneten Gelenkelements das durch die beiden Stegabschnitte des an der Unterseite des Trägerelements angeordneten Gelenkelements zusammen mit dessen Befestigungsabschnitt gebildeten Dreiecks durchdringen.

Der Anlageabschnitt 5 muss nicht notwendigerweise integral oder einstückig mit den jeweils über diesen miteinander verbundenen Stegabschnitten ausgeführt sein. Es ist auch denkbar, dass der Anlageabschnitt 5 ein separates Teil des Gelenks darstellt, welches lösbar, z.B. mittels Schrauben, oder unlösbar, beispielweise durch Kleben, Löten oder Schweißen, mit den jeweiligen Stegabschnitten verbunden ist.

An beiden distalen Enden des Trägerelements 2 ist jeweils ein elastisch deformierbares Stützelement 7 angeordnet. Dabei ist das jeweilige Stützelement mit einem seiner Endabschnitte in einer entsprechenden Ausnehmung des Trägerelements eingesetzt und dort über eine Klemmverbindung befestigt. Andere Arten der Befestigung, wie beispielsweise eine Verschraubung oder eine Verklebung, sind ebenso denkbar.

Das Stützelement erstreckt sich mit seiner länglichen Form in einer dem Trägerelement abgewandten Richtung und weist an seinem freien Ende einen sich verbreiternden Endabschnitt auf, wobei der freie Endabschnitt dazu vorgesehen ist, an einer übergeordneten Struktur, in welcher das erfindungsgemäße Gelenk eingesetzt ist, anzugreifen, vorzugweise über eine Klemmverbindung. Durch die Verbindung des Stützelements mit der übergeordneten Struktur soll dieses Stützelement mit einer Druckkraft beaufschlagt werden, und diese Druckkraft bewirkt eine Zugkraftbelastung der Gelenkelemente und insbesondere eine entsprechende Vorspannung der Stegabschnitte in einer Richtung, die im Wesentlichen mit der Erstreckungsrichtung des Trägerelements bzw. des Gelenks übereinstimmt.

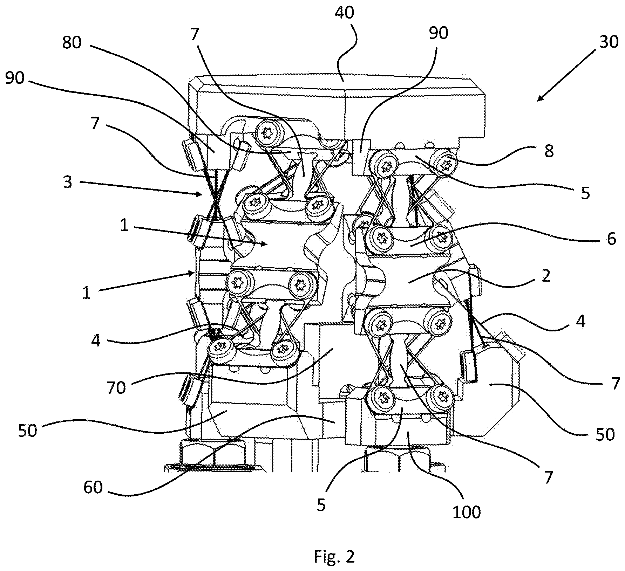

Figur 2 zeigt die Anordnung bzw. die Verwendung des erfindungsgemäßen Gelenks gemäß Figur 1 in einer hexapodartigen, parallelkinematischen Verstellvorrichtung 30. Diese weist eine um zwei zueinander senkrecht verlaufende Achsen verkippbare und entlang einer weiteren Achse linear verschiebbare Plattform 40 auf, mit welcher insgesamt sechs erfindungsgemäße Gelenke 1 jeweils über eine Schraubverbindung befestigt sind. Die Plattform 30 ist relativ gegenüber einer in Fig. 2 nicht dargestellten feststehenden Basis bewegbar bzw. verkippbar.

Jedes der sechs Gelenke 1 weist vier an dem Trägerelement 2 angeordnete Gelenkelemente 3 und zwei an dem Trägerelement angeordnete Stützelemente 7 auf, wobei die Gelenkelemente 3 paarweise an den gegenüberliegenden Enden des Trägerelements 2 angeordnet sind, und die Stützelemente 7 einzeln an den gegenüberliegenden Enden des Trägerelements 2 vorgesehen sind.

Drei der sechs Gelenke 1 sind im Wesentlichen senkrecht zu der Plattform 40 ausgerichtet, während die verbleibenden drei Gelenke zu der Plattform 40 geneigt angeordnet sind. An ihrem der Plattform abgewandten Ende sind bei den im Wesentlichen senkrecht zu der Plattform 40 ausgerichteten bzw. angeordneten Gelenken 1 in Fig. 2 nicht zu erkennende Antriebselemente angeordnet, die dazu dienen, die entsprechenden Gelenke in Richtung auf die Plattform zu oder in entsprechend entgegengesetzter Richtung zu bewegen. Diese drei aktiv durch Antriebselemente bewegten Gelenke stellen somit aktiv bewegte Gelenke dar (im Folgenden auch als aktive Gelenke bezeichnet). Die drei anderen und geneigt zu der Plattform angeordneten Gelenke sind hingegen nicht mit Antriebselementen verbunden und werden nicht aktiv, sondern nur indirekt bzw. passiv aufgrund der Bewegung der aktiv bewegten Gelenke bewegt (im Folgenden auch als passive Gelenke bezeichnet).

Die passiven Gelenke bzw. deren entsprechende Anlageabschnitte 5 sind jeweils mit ihrem der Plattform abgewandten Ende über eine Schraubverbindung mit einem Anlageelement 50 verbunden. Das Anlageelement 50 selbst ist mit einer Führungsplattform 60 verbunden. Die Führungsplattform 60 ist über eine entsprechende und in Fig. 2 nicht zu erkennende Ausnehmung in Eingriff mit einem Führungselement 70, welches durch die Ausnehmung in der Führungsplattform hindurchragt. Somit gelingt eine lineare Führung der Führungsplattform bei ihrer Bewegung in Richtung auf die Plattform 40 zu.

Die passiven Gelenke 1 sind an ihrem der Plattform 40 zugewandten Ende mit ihren jeweiligen Anlageabschnitten 5 an einem gemeinsamen inneren Halteabschnitt 80 der Plattform 40 über eine Schraubverbindung befestigt, wobei der innere Halteabschnitt 88 integral bzw. einstückig mit der Plattform ausgebildet ist. Dieser innere Halteabschnitt 80 befindet sich im Wesentlichen in der Mitte der Plattform 40, und die drei passiven Gelenke sind somit im Wesentlichen auf die Mitte der Plattform 40 ausgerichtet bzw. ihre Längserstreckungsrichtungen laufen auf die Mitte der Plattform 40 zu.

Die passiven Gelenke dienen hierbei in erster Linie der Führung der Plattform bei deren Verkippung in zwei zueinander senkrechten verlaufenden Kippachsen, wobei der Kreuzungspunkt der Kippachsen den sog. Pivot-Punkt definiert. Die Kippachsen bzw. der Pivot-Punkt liegen idealerweise außerhalb der parallelkinematischen Verstellvorrichtung, und zwar an der Oberfläche des zu verstellenden Objekts, beispielsweise eines Spiegels. Andere Positionen bzw. Lagen des Pivot-Punktes, etwa innerhalb der Plattform 40, sind ebenfalls denkbar, wobei die Position bzw. Lage des Pivot-Punktes über den Abstand der passiven Gelenke zueinander bzw. über den Neigungswinkel der passiven Gelenke, d.h. den Winkel, den die passiven Gelenke mit der Plattform bzw. der Basis einschließen, einstellbar ist.

Das der Plattform 40 zugewandte Stützelement 7 eines Gelenks greift in eine entsprechende Ausnehmung des inneren Halteabschnitts 80 ein, während das der Plattform 40 abgewandte Stützelement 7 eines Gelenks in eine entsprechende Ausnehmung des Anlageelements 50 eingreift. Die beiden Stützelemente 7 sind jeweils in der entsprechenden Ausnehmung mittels einer Klemmverbindung gehaltert. Da die Orte der Befestigung des jeweiligen Anlageabschnitts einen Abstand zum jeweiligen Trägerelement haben, der geringer ist als die Länge des Stützelements, ergibt sich durch die gleichzeitige Anordnung des Stützelements in der Ausnehmung des Anlageelements bzw. des Halteabschnitts eine elastische Stauchung des Stützelements, welche eine Zugkraftbelastung hinsichtlich der Gelenkelemente und insbesondere deren Stegabschnitte bewirkt. Damit gelingt eine entsprechende Vorspannung der Stegabschnitte im Wesentlichen in Erstreckungsrichtung des Gelenks.

Die drei aktiv über Antriebselemente bewegte Gelenke sind beabstandet zu der Führungsplattform und nicht mit dieser verbunden angeordnet. Die der Plattform 40 zugewandten Anlageabschnitte 5 der aktiven Gelenke sind jeweils über eine Schraubverbindung mit einem zugeordneten äußeren Halteabschnitt 90 der Plattform 40 verbunden, wobei auch die insgesamt drei äußeren Halteabschnitte 9 integral bzw. einstückig mit der Plattform 40 ausgeführt sind.

Die der Plattform 40 abgewandten Anlageabschnitte 5 der aktiven Gelenke sind jeweils über eine Schraubverbindung mit einem Betätigungsabschnitt 100 der Basis der parallelkinematischen Verstellvorrichtung verbunden, wobei auf den jeweiligen Betätigungsabschnitt 100 das zugehörige und in Fig. 2 nicht dargestellte Antriebselement derart einwirken kann, dass dieses und damit auch das an dem Betätigungsabschnitt angeordnete Gelenk auf die Plattform 40 zu bewegt wird, und somit entweder - im Falle der simultanen und gleichgerichteten Bewegung der Gelenke in Richtung auf die Plattform zu - eine rein translatorische und über die Führungsplattform zusammen mit dem Führungselement geführte Bewegung der Plattform in einer zu der Basis der parallelkinematischen Verstellvorrichtung abgewandten Richtung, oder aber - im Falle, dass nur ein Gelenk oder nur zwei Gelenke in die gleiche Richtung bzw. die Gelenke in entgegengesetzte Richtung bewegt werden - eine weitestgehend über die passiven Gelenke geführte Kippbewegung der Plattform um den Pivot-Punkt resultiert.

Aufgrund der Stützelemente 7 des erfindungsgemäßen Gelenks 1 wird eine vergleichsweise hohe axiale Steifigkeit bei den aktiven Gelenke erreicht, so dass die durch die Antriebselemente in das jeweilige aktive Gelenk eingebrachte Kraft in eine effektive und weitgehend verlustfreie Verstellbewegung der Plattform umgesetzt werden kann.

Auf der anderen Seite sorgen die Stützelemente bei den passiven Gelenken für eine definierte Bewegung um die Kippachsen und für eine stabile Lage bzw. Position des Pivot-Punkts.

### Bezugszeichenliste

- 1: Gelenk
- 2: Trägerelement
- 21: Oberseite des Trägerelements
- 22: Unterseite des Trägerelements
- 3: Gelenkelement
- 4: Stegabschnitt
- 5: Anlageabschnitt
- 6: Befestigungsabschnitt
- 7: Stützelement
- 8: Befestigungselement
- 30: Parallelkinematische Verstellvorrichtung
- 40: Plattform
- 50: Anlageelement
- 60: Führungsplattform
- 70: Führungselement
- 80: innerer Halteabschnitt
- 90: äußerer Halteabschnitt
- 100: Betätigungsabschnitt

## Patentansprüche

1. Gelenk (1), welches zumindest drei Rotationsfreiheitsgrade aufweist, mit einem starren Trägerelement (2) und mindestens zwei an dem Trägerelement in wenigstens abschnittsweise überlappender Anordnung ausgebildeten elastisch deformierbaren Gelenkelementen (3), wobei jedes der Gelenkelemente (3) zwei an dem Trägerelement (2) angeordnete und sich von diesem erstreckende stabförmige Stegabschnitte (4) aufweist, die entweder konvergierend oder divergierend zueinander angeordnet und an ihrem dem Trägerelement (2) abgewandten Ende über einen Anlageabschnitt (5) miteinander verbunden sind, wobei zwei miteinander verbundene Stegabschnitte (4) in einer ersten gemeinsamen Ebene verlaufen und die anderen zwei miteinander verbundenen Stegabschnitte (4) in einer zweiten gemeinsamen Ebene verlaufen, und sich die erste gemeinsame Ebene und die zweite gemeinsame Ebene kreuzen.

2. Gelenk nach Anspruch 1, **dadurch gekennzeichnet, dass** die Stegabschnitte (4) des einen Gelenkelements (3) zumindest abschnittsweise zwischen den Stegabschnitten (4) des anderen Gelenkelements (3) verlaufen.

3. Gelenk nach Anspruch 1 oder 2, **dadurch gekennzeichnet, dass** der Anlageabschnitt einstückig mit den beiden zugeordneten stabförmigen Stegabschnitten (4) ausgebildet ist.

4. Gelenk nach einem der vorhergehenden Ansprüche, **dadurch gekennzeichnet, dass** die beiden Stegabschnitte (4) eines Gelenkelements (3) an ihrem dem Trägerelement (2) zugewandten Ende über einen integral mit den Stegabschnitten (4) ausgebildeten Befestigungsabschnitt (6) miteinander verbunden sind, und das jeweilige Gelenkelement (3) über den Befestigungsabschnitt (6) mit dem Trägerelement (2) verbunden ist.

5. Gelenk nach einem der vorhergehenden Ansprüche, **dadurch gekennzeichnet, dass** die Stegabschnitte (4) eines Gelenkelements (3) einen Winkel zwischen sich einschließen, der zwischen 60 und 120°, und bevorzugt zwischen 70 und 95° beträgt.

6. Gelenk nach einem der vorhergehenden Ansprüchen, **dadurch gekennzeichnet, dass** an dem Trägerelement (2) wenigstens ein elastisch deformierbares Stützelement (7) angeordnet ist.

7. Gelenk nach Anspruch 5, **dadurch gekennzeichnet, dass** sich das Stützelement (7) zwischen den beiden Gelenkelementen (3) in einer dem Trägerelement (2) abgewandten Richtung erstreckt.

8. Gelenk nach einem der vorhergehenden Ansprüche, **dadurch gekennzeichnet, dass** dieses vier an dem Trägerelement (2) angeordnete Gelenkelemente (3) und zwei an dem Trägerelement (2) angeordnete Stützelemente (7) aufweist, wobei die Gelenkelemente (3) paarweise und die Stützelemente (7) einzeln an den gegenüberliegenden Enden des Trägerelements (2) vorgesehen sind.

9. Parallelkinematische Verstellvorrichtung mit einer feststehenden Basis und einer gegenüber der Basis verstellbaren Plattform, wobei zwischen der Basis und der Plattform wenigstens ein Gelenk nach einem der vorstehenden Ansprüche angeordnet ist.

10. Parallelkinematische Verstellvorrichtung gemäß Anspruch 9, **dadurch gekennzeichnet, dass** diese sechs Gelenke aufweist, wobei an drei Gelenken jeweils ein Antriebselement zum einzelnen Antrieb des entsprechenden Gelenks angeordnet ist, und die drei anderen Gelenke mit einem ihrer Endabschnitte mit einer gemeinsamen Führungsplattform verbunden sind.

11. Parallelkinematische Verstellvorrichtung gemäß Anspruch 10, **dadurch gekennzeichnet, dass** die mit der gemeinsamen Führungsplattform verbundenen Gelenke mit ihrem jeweils anderen Endabschnitt mit einem inneren Halteabschnitt der Plattform verbunden sind.

## Claims

1. Joint (1), which has at least three degrees of rotational freedom, with a rigid carrier element (2) and at least two elastically deformable joint elements (3) formed on said carrier element in an overlapping arrangement, at least in sections, where each of said joint elements (3) comprises two rod-shaped web portions (4) arranged on said carrier element (2) and extending therefrom which are arranged either converging or diverging relative to each other, and at their end (2) facing away from said carrier element (2) are connected to each other by way of a contact portion (5), where two web portions (4) connected to each other extend in a first common plane and said other two web portions (4) connected to each other extend in a second common plane, and the first common plane and the second common plane intersect.

2. Joint according to claim 1, **characterized in that** said web portions (4) of said one joint element (3) extend at least in sections between said web portions (4) of said other joint element (3).

3. Joint according to claim 1 or 2, **characterized in that** said contact portion is formed integrally with said two associated rod-shaped web portions (4).

4. Joint according to one of the preceding claims, **characterized in that** said two web portions (4) of a joint element (3) at their end facing toward said carrier element (2) are connected to each other via a fastening portion (6) that is integrally formed with said web portions (4), and said respective joint element (3) is connected to said carrier element (2) via said fastening portion (6).

5. Joint according to one of the preceding claims, **characterized in that** said web portions (4) of a joint element (3) define an angle between them which is between 60 and 120°, and preferably between 70 and 95°.

6. Joint according to one of the preceding claims, **characterized in that** at least one elastically deformable support element (7) is arranged on said carrier element (2).

7. Joint according to claim 5, **characterized in that** said support element (7) extends between said two joint elements (3) in a direction facing away from said carrier element (2).

8. Joint according to one of the preceding claims, **characterized in that** it comprises four joint elements (3) arranged on said carrier element (2) and two support elements (7) arranged on said carrier element (2), where said joint elements (3) are provided in pairs and said support elements (7) individually at the oppositely disposed ends of said carrier element (2).

9. Parallel-kinematic adjustment device with a fixed base and a platform that is adjustable relative to said base, where at least one joint according to one of the preceding claims is arranged between said base and said platform.

10. Parallel-kinematic adjustment device according to claim 9, **characterized in** it comprises six joints, where a drive element is each arranged on three joints for individually driving the respective joint, and said three other joints are connected with one of their end portions to a common guide platform.

11. Parallel-kinematic adjustment device according to claim 10, **characterized in that** said joints connected to said common guide platform are connected with their respective other end portion to an inner holding portion of said platform.

## Revendications

1. Articulation (1) présentant au moins trois degrés de liberté de rotation, avec un élément porteur (2) rigide et au moins deux éléments d'articulation (3) pouvant être déformés de manière élastique et réalisés au niveau de l'élément porteur selon un agencement où ils se chevauchent au moins par sections, dans laquelle chacun des éléments d'articulation (3) présente deux sections formant barre (4), en forme de baguette, agencées au niveau de l'élément porteur (2) et s'étendant à partir de celui-ci, qui sont agencées de manière convergente ou divergente l'une par rapport à l'autre et sont reliées l'une à l'autre au niveau de leur extrémité opposée à l'élément porteur (2) par l'intermédiaire d'une section de butée (5), dans laquelle deux sections formant barre (4) reliées l'une à l'autre s'étendent dans un premier plan commun et les deux autres sections formant barre (4) reliées l'une à l'autre s'étendent dans un second plan commun, et le premier plan commun et le second plan commun se croisent.

2. Articulation selon la revendication 1, **caractérisée en ce que** les sections formant barre (4) d'un élément d'articulation (3) s'étendent au moins par sections entre les sections formant barre (4) de l'autre élément d'articulation (3).

3. Articulation selon la revendication 1 ou 2, **caractérisée en ce que** la section de butée est réalisée d'un seul tenant avec les deux sections formant barre (4) en forme de baguette associées.

4. Articulation selon l'une quelconque des revendications précédentes, **caractérisée en ce que** les deux sections formant barre (4) d'un élément d'articulation (3) sont reliées l'une à l'autre au niveau de leur extrémité tournée vers l'élément porteur (2) par l'intermédiaire d'une section de fixation (6) réalisée d'un seul tenant avec les sections formant barre (4), et l'élément d'articulation (3) respectif est relié à l'élément porteur (2) par l'intermédiaire de la section de fixation (6).

5. Articulation selon l'une quelconque des revendications précédentes, **caractérisée en ce que** les sections formant barre (4) d'un élément d'articulation (3) forment entre elles un angle compris entre 60 et 120°, et de manière préférée compris entre 70 et 95°.

6. Articulation selon l'une quelconque des revendications précédentes, **caractérisée en ce qu'**au moins un élément d'appui (7) pouvant être déformé de manière élastique est agencé au niveau de l'élément porteur (2).

7. Articulation selon la revendication 5, **caractérisée en ce que** l'élément d'appui (7) s'étend entre les deux éléments d'articulation (3) dans une direction opposée à l'élément porteur (2).

8. Articulation selon l'une quelconque des revendications précédentes, **caractérisée en ce qu'**elle présente quatre éléments d'articulation (3) agencés au niveau de l'élément porteur (2) et deux éléments d'appui (7) agencés au niveau de l'élément porteur (2), dans laquelle les éléments d'articulation (3) sont fournis par paires et les éléments d'appui (7) sont fournis de manière individuelle au niveau des extrémités opposées de l'élément porteur (2).

9. Dispositif de réglage cinématique parallèle avec une base fixe et une plate-forme réglable par rapport à la base, dans lequel au moins une articulation selon l'une quelconque des revendications précédentes est agencée entre la base et la plate-forme.

10. Dispositif de réglage cinématique parallèle selon la revendication 9, **caractérisé en ce qu'**il présente six articulations, dans lequel respectivement un élément d'entraînement destiné à l'entraînement individuel de l'articulation correspondante est agencé au niveau de trois articulations, et les trois autres articulations sont reliées à une plate-forme de guidage commune par l'une de leurs sections d'extrémité.

11. Dispositif de réglage cinématique parallèle selon la revendication 10, **caractérisé en ce que** les articulations reliées à la plate-forme de guidage commune sont reliées à une section interne de retenue de la plate-forme par leur autre section d'extrémité respective.
